# EUROPÄISCHE PATENTANMELDUNG

(11) **EP 2 045 552 A2**
(43) Veröffentlichungstag der Anmeldung: **08.04.2009**
(21) Anmeldenummer: 08012396.1
(22) Anmeldetag: 09.07.2008
(51) Int. Cl.: F27B 3/10, G01N 1/12, C21C 5/46

(54) **Vorrichtung zur Verwendung bei Temperaturen oberhalb 1000° C oder in Stahlschmelzen sowie deren Verwendung**

(30) Priorität: 17.07.2007 DE 102007033622
(71) Anmelder: Heraeus Electro-Nite International N.V., 3530 Houthalen (BE)
(72) Erfinder: Knevels, Johan, 3960 Bree (BE)
(74) Vertreter: Kühn, Hans-Christian

(57) **Zusammenfassung**

Die Erfindung betrifft eine Vorrichtung zur Verwendung bei Temperaturen oberhalb 1000 °C oder in Stahlschmelzen, wobei die Vorrichtung einen Körper aufweist auf Basis von Sand und/oder hochtemperaturbeständigen Hohlkugeln und/oder hochtemperaturbeständigen Hohlfasern, **dadurch gekennzeichnet, dass** der Körper Wasserglas und einen Zement enthält.

## Beschreibung

Die Erfindung betrifft eine Vorrichtung zur Verwendung bei Temperaturen oberhalb 1000 °C oder in Stahlschmelzen, wobei die Vorrichtung einen Körper aufweist auf Basis von Sand und/oder hochtemperaturbeständigen Hohlkugeln und/oder hochtemperaturbeständigen Hohlfasern.

Aus GB 782205 sind Hohlkerne aus der Gießereitechnik bekannt, die aus einer Mischung aus Sand und einem Wasserglasbinder sowie organischen Materialien gebildet sind. Vorrichtungen der gattungsgemäßen Art können als Körper von Messköpfen dienen, wie sie in DE 10 2004 022 763 B3 offenbart sind.
Ähnliche Vorrichtungen sind auch aus DE 10 2005 060 493 B3 bekannt.

Bekannte Vorrichtungen weisen Bindemittel auf, die zu einem großen Teil organische Materialien enthalten, die bei der Herstellung phenolhaltige oder ammoniakhaltige Gase freisetzen können.

Aufgabe der vorliegenden Erfindung ist es, eine verbesserte Vorrichtung für hohe Temperaturen oder für Stahlschmelzen bereitzustellen, die hinsichtlich der Einflüsse auf Umwelt und Gesundheit gegenüber den bekannten Vorrichtungen verbessert sind.

Die Aufgabe wird durch die Merkmale der unabhängigen Ansprüche gelöst. Vorteilhafte Ausführungsformen ergeben sich aus den abhängigen Ansprüchen. Die erfindungsgemäße Vorrichtung weist einen Körper auf, der auf Basis von Sand und/oder hochtemperaturbeständigen Hohlkugeln und/oder hochtemperaturbeständigen Hohlfasern gebildet ist und der Wasserglas und einen (anorganischen) Zement enthält. Unter hochtemperaturbeständig wird dabei eine mechanische und chemische Beständigkeit bei Temperaturen von etwa 1000 bis 1700 °C für einen Zeitraum von mindestens 5 Sekunden bei einer Temperatur von 1700 °C verstanden, das ist die Zeit, die etwa für eine Probennahme benötigt wird, sowie für einen Zeitraum von bis zu 5 Minuten bei einer Temperatur von 1000 °C. Überraschenderweise hat sich gezeigt, dass derartige Körper auch während einer längeren Lagerung mechanisch stabil bleiben, während bisherige Versuche mit harzfreien Bindemitteln nicht zu einem Körper führen, der längere Zeit lagerfähig ist und dabei mechanisch stabil bleibt. Es hat sich gezeigt, dass Körper gemäß der Erfindung nicht nur lagerstabil sind, sondern auch im späteren Gebrauch eine ausreichende Stabilität aufweisen. Sie geben praktisch keine hinsichtlich der Umwelt oder Gesundheit bedenklichen Stoffe während ihrer Herstellung ab. Die Materialien sind gut zu Formkörpern verarbeitbar. Zusätzlich hat sich gezeigt, dass als Probenkammern verwendete erfindungsgemäße Vorrichtungen zwar einerseits mechanisch stabil sind, so dass eine unkomplizierte Probennahme sichergestellt wird, dass aber andererseits derartige Körper leicht durch gezielte äußere Einwirkungen zerstört werden können, um die Proben aus ihrem Inneren zu entnehmen. Bei Verwendung von beispielsweise Keramikkörpern ist dies nicht ohne weiteres möglich. Des Weiteren hat sich gezeigt, dass die Proben hinsichtlich ihres Kohlenstoff-Gehaltes nur äußerst gering beeinflusst werden. Daher eignen sich die erfindungsgemäßen Vorrichtungen überraschend gut als Probennehmer und/oder Messvorrichtungen für Stahlschmelzen, insbesondere für Stahlschmelzen mit einem Kohlenstoffgehalt von weniger als 100 ppm. Es hat sich gezeigt, dass der Körper der erfindungsgemäßen Vorrichtungen sehr zuverlässig und haltbar mittels Kernschießen hergestellt werden kann.

Vorzugsweise weist der Körper einen Tonerdezement, insbesondere einen Zement aus der Gruppe Kalzium-Aluminat-Zement, Portland-Zement, Phophat-Zement auf. Portland-Zement wird auch als Hochofenzement bezeichnet. Als Reaktionsbeschleuniger kann der Körper der erfindungsgemäßen Vorrichtung Lithium-Carbonat, Kalzium-Chloride, Natrium-Chloride oder Gips in geringen Mengen von vorzugsweise insgesamt höchstens einem Gewichts-% enthalten.

Als zusätzliche Bindungsverstärker können Flugasche und/oder Kieselsäure verwendet werden, insbesondere mit einem Anteil von höchstens 10 Gew.-%. Des Weiteren kann vorteilhafterweise ein Trennmittel zur leichteren Entnahme des Körpers aus der Herstellvorrichtung enthalten sein. Das Trennmittel (beispielsweise Teflon oder ein Öl) ist vorteilhafterweise mit einem Anteil von höchstens 0,5 Gew.-% vorhanden.

Es ist weiterhin zweckmäßig, dass Wasserglas mit einem Anteil von 5 - 15 Gew.-% und Zement mit einem Anteil von 10 - 20 Gew.-% vorhanden ist. Der Sand, die Hohlkugeln und/oder die Hohlfasern sind vorteilhafterweise mit einem Anteil von höchstens 75 Gew.-% vorhanden. Der Sand kann insbesondere sogenannter Gießereisand oder Formsand sein. Die Korngröße sollte zweckmäßigerweise zwischen 90 und 700 µm liegen, insbesondere sollte sie 200 - 300 µm betragen.

Die Hohlkugeln und/oder Hohlfasern sind vorteilhafterweise aus Aluminiumoxid oder Aluminiumsilikat gebildet. Der Sand, die Hohlkugeln und/oder die Hohlfasern sind vorteilhafterweise mit einem Anteil von 55 - 75 Gew.-%, vorzugsweise mit einem Anteil von 60 - 70 Gew.-% vorhanden.

Ein derartiger Körper kann sehr gut bei einer Vorrichtung zum Eintauchen in Stahlschmelzen verwendet werden, wenn ein sogenanntes spritzfreies (non splash) Material verwendet werden muss, um die Beeinflussung der Umgebung gering zu halten.

Nachfolgend werden Ausführungsbeispiele der Erfindung beschrieben.

Die erfindungsgemäße Vorrichtung kann beispielsweise wie in DE 10 2004 022 763 B3 oder in DE 10 2005 060 493 B3 beschrieben, gestaltet sein. Auch andere Gestaltungen sind denkbar. Die in DE 10 2005 060 493 B3 beschriebene Vorrichtung ist geeignet sowohl zur Messung als auch zur Probennahme in Metallschmelzen, insbesondere in Stahlschmelzen, oder in Schlacke.

Gemäß einem Ausführungsbeispiel kann der Körper der erfindungsgemäßen Vorrichtung gebildet sein aus:
65 Gew.-% Gießereisand
15 Gew.-% Portland Zement
10 Gew.-% Kieselsäure
9 Gew.-% Natronwasserglas
0.7 Gew.-% Kalziumchloride
0.3 Gew.-% Trennmittel.

Gemäß einem weiteren Ausführungsbeispiel kann der erfindungsgemäße Körper wie folgt zusammengesetzt sein:
75 Gew.-% Formsand
10 Gew.-% Tonerdezement
14 Gew.-% Kaliumsilikat (Wasserglas)
0.6 Gew.-% Natriumchloride
0.4 Gew.-% Trennmittel.

Ein weiteres Ausführungsbeispiel einer erfindungsgemäßen Vorrichtung weist einen Körper mit folgender Zusammensetzung auf:
70 Gew.-% Hohlkugeln oder Hohlfasern aus Aluminiumoxid oder Aluminiumsilikat
20 Gew.-% Phosphatzement
9 Gew.-% Natronwasserglas
0.5 Gew.-% Gips
0.5 Gew.-% Trennmittel.

Als Trennmittel kann z. B. Teflon verwendet werden.

## Patentansprüche

1. Vorrichtung zur Verwendung bei Temperaturen oberhalb 1000 °C oder in Stahlschmelzen, wobei die Vorrichtung einen Körper aufweist auf Basis von Sand und/oder hochtemperaturbeständigen Hohlkugeln und/oder hochtemperaturbeständigen Hohlfasern, **dadurch gekennzeichnet, dass** der Körper Wasserglas und einen Zement enthält.

2. Vorrichtung nach Anspruch 1, **dadurch gekennzeichnet, dass** der Körper einen TonerdeZement, insbesondere einen Zement aus der Gruppe Kalzium-Aluminat-Zement, Portland-Zement, Phosphat-Zement, enthält.

3. Vorrichtung nach Anspruch 1 oder 2, **dadurch gekennzeichnet, dass** der Körper Lithium-Carbonat und/oder Kalziumchloride und/oder Natriumchlorid und/oder Gips enthält.

4. Vorrichtung nach einem der Ansprüche 1 bis 3, **dadurch gekennzeichnet, dass** der Körper Flugasche und/oder Kieselsäure und/oder ein Trennmittel enthält.

5. Vorrichtung nach einem der Ansprüche 1 bis 4, **dadurch gekennzeichnet, dass** Wasserglas mit einem Anteil von 5 - 15 Gew.-% und Zement mit einem Anteil von 10 - 20 Gew.-% vorhanden ist.

6. Vorrichtung nach einem der Ansprüche 1 bis 5, **dadurch gekennzeichnet, dass** Sand und/oder Hohlkugeln und/oder Hohlfasern mit einem Anteil von insgesamt höchstens 75 Gew.-%, insbesondere von 60 bis 70 Gew.-%, vorhanden sind.

7. Vorrichtung nach Anspruch 3, **dadurch gekennzeichnet, dass** Lithium-Carbonat und/oder Kalziumchloride und/oder Natriumchlorid und/oder Gips mit einem Anteil von insgesamt höchstens 1 Gew.-% vorhanden ist.

8. Vorrichtung nach Anspruch 4, **dadurch gekennzeichnet, dass** Flugasche und/oder Kieselsäure mit einem Anteil von höchstens 10 Gew.-% und/oder das Trennmittel mit einem Anteil von höchstens 0,5 Gew.-% vorhanden ist.

9. Vorrichtung nach einem der Ansprüche 1 bis 8, **dadurch gekennzeichnet, dass** der Sand Gießereisand oder Formsand ist.

10. Vorrichtung nach einem der Ansprüche 1 bis 9, **dadurch gekennzeichnet, dass** der Sand eine Korngröße von 90 bis 700 µm, insbesondere von 200 bis 300 µm aufweist.

11. Vorrichtung nach einem der Ansprüche 1 bis 8, **dadurch gekennzeichnet, dass** die Hohlkugeln oder Hohlfasern auf Basis von Aluminiumoxid oder Aluminiumsilikat gebildet sind.

12. Verwendung der Vorrichtung nach einem der Ansprüche 1 bis 11 als Probennehmer und/oder Messvorrichtung für Stahlschmelzen.

13. Verwendung der Vorrichtung nach einem der Ansprüche 1 bis 11 für Stahlschmelzen mit einem Kohlenstoffgehalt von weniger als 100 ppm.

14. Verfahren zur Herstellung eines Körpers einer Vorrichtung nach einem der Ansprüche 1 bis 11 mittels Kernschießen.
